(19) Europäisches Patentamt / European Patent Office / Office européen des brevets

(11) **EP 4 560 277 A1**

(12) **EUROPEAN PATENT APPLICATION**

(43) Date of publication:
28.05.2025 Bulletin 2025/22

(21) Application number: 23307024.2

(22) Date of filing: 21.11.2023

(51) International Patent Classification (IPC):
*G01J 3/45* (2006.01)    *G01J 3/10* (2006.01)

(52) Cooperative Patent Classification (CPC):
**G01J 3/45; G01J 3/10;** G01J 2003/102;
G01J 2003/104; G01J 2003/106

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: **Unity Semiconductor**
**38330 Montbonnot-Saint-Martin (FR)**

(72) Inventor: **VERGNET, Hadrien**
**38400 SAINT-MARTIN D'HERES (FR)**

(74) Representative: **IPAZ**
**Bâtiment Platon**
**Parc Les Algorithmes**
**91190 Saint-Aubin (FR)**

(54) **A METHOD AND A DEVICE FOR SPECTRAL DISPERSION COMPENSATION IN INTERFEROMETERS**

(57) The invention relates to a method (500) for acquiring an interference signal, comprising:
- splitting an incident light wave into a first light wave and a second light wave propagating respectively in a first light path and a second light path of an interferometer,
- adjusting an optical path difference between the first light wave and the second light wave, and
- producing the interference signal by combining said first light wave and said second light wave on a detector, the method being characterized in that it further comprises:
- measuring a spectral dispersion using the interference signal, and
- compensating (505) said spectral dispersion by angularly positioning a dispersion compensation plate of dispersive material in a compensation angular position, with respect to an optical axis of the first light wave or the second light wave, to meet a spectral dispersion criterion.

The invention further relates to an interferometer device implementing such a method.

**FIG. 2**

EP 4 560 277 A1

**Description**

**Field of the invention**

The present invention relates to a method for compensating the spectral dispersion in an interferometer device. It also relates to an interferometer device implementing such a method.

The field of the invention is the field of interferometry, interferometric imaging, and Fourier transform spectroscopy.

**Background**

Fourier transform spectrometers (FT spectrometers) are well-known devices for doing a spectral analysis of an incoming light. They may be implemented in several ways. One of the most common implementations is based on a Michelson interferometer scheme.

The incoming light is split, by a central beam splitter, into a reference wave traveling in a reference arm with a static mirror and a measurement wave traveling into a measurement arm with a movable mirror. The light reflected by both mirrors is combined on a detector to interfere.

The FT spectrometer is operated by acquiring, on the detector, the intensity of the interference light that is received for different positions of the movable mirror, corresponding to different optical path differences or delay between the measurement and the reference waves.

When a complete interferogram of the measurement light is acquired, its Fourier Transform provides the power spectral density of that measurement light.

To obtain accurate spectral information, it is essential to be able to acquire interference signals free of any spectral dispersion brought in by the interferometer. The major cause of spectral dispersion comes from materials other than air or vacuum crossed by the light waves which have an index of refraction varying significantly with the wavelength of the light. The consequence of such varying index of refraction is that the optical path length of the light in the material varies with the wavelength.

If the dispersion cannot be fully compensated between the light paths of the interferometer, it is notably impossible to reach a "contact" position, corresponding to a zero optical path difference between the waves traveling in the respective interferometer's arms, valid for all wavelengths of interest simultaneously, and thus to have a constructive interference condition for all these wavelengths simultaneously. In that case, the FT of the interferogram is not fully representative of the power spectral density of the light.

Therefore, in a Michelson interferometer configuration, it is known to use a beam splitter plate, instead of a beam splitter cube for instance, to minimize the thickness of glass material crossed by the light waves, and to add a compensating plate in the arm of the interferometer in which the light has travelled the less through the beam splitter plate.

In the ideal case, if the compensating plate is of the same material or with the same index of refraction over the spectral range of the light, the same thickness, and the same angular orientation as the beam splitter plate, the light travels an equal path through the glass material in both arm of the interferometer, such that the dispersion along these paths is fully equal, and thus compensated.

However, thickness tolerances for components may be in the order of +/-0.1 mm for a beam splitter or a compensating plate with a thickness of 3mm.

For instance, for a glass plate made of fused silica, with a thickness uncertainty of +/-0.1mm, considering the refractive index of fused silica (n = 1.458 at $\lambda$ = 600nm), the difference in optical path in the glass material between the two arms of the interferometer goes up to more than $50\mu m$ one way, or $100\mu m$ round trip, which is not acceptable for most applications.

In addition, due to the variation of the index of refraction with the wavelength, that difference in optical path in the glass material varies also significantly with the wavelength. For instance, always with fused silica, the difference of optical path in the glass material due to a thickness uncertainty of +/-0.1mm between a beam splitter and a compensating plate varies of more than $2\mu m$ for wavelengths between 400nm and 800nm.

**Summary of the invention**

A purpose of the present invention is to propose an interferometer device which overcome at least one of the drawbacks of the known techniques.

Another purpose of the present invention is to propose an interferometer device implementing a device and a method for compensating the spectral dispersion.

Another purpose of the present invention is to provide an interferometer with a dispersion compensation device and method which can be implemented with off-the-shelf components having usual or standard tolerances.

Another purpose of the invention is to provide an interferometer with a dispersion compensation device and method which allows compensating spectral dispersion with an accuracy down to a fraction of wavelength over a large spectral range.

Another purpose of the invention is to provide an interferometer with a dispersion compensation device and method which allows a monitoring and a compensation of the dispersion during the operation.

Another purpose of the invention is to provide such interferometer of the Michelson type with a thorough compensation of the spectral dispersion.

Another purpose of the invention is to provide such interferometer implementing a Fourier Transform Spectrometer with a thorough compensation of the spectral dispersion for obtaining spectral information of a measurement light.

Another purpose of the invention is to provide such interferometer with a thorough compensation of the spectral dispersion for obtaining spectral information from a measurement light generated by photoluminescence or fluorescence.

At least one of these aims is achieved by a method for acquiring an interference signal, comprising:

- splitting an incident light wave into a first light wave and a second light wave propagating respectively in a first light path and a second light path of an interferometer,
- adjusting an optical path difference between the first light wave and the second light wave, and
- producing the interference signal by combining said first light wave and said second light wave on a detector,

the method being characterized in that it further comprises:

- measuring a spectral dispersion using the interference signal, and
- compensating said spectral dispersion by angularly positioning a dispersion compensation plate of dispersive material in a compensation angular position, with respect to an optical axis of the first light wave or the second light wave, to meet a spectral dispersion criterion .

The method according to the present invention allows for acquiring interference signals for which the spectral dispersion is measured and minimized. The spectral dispersion compensation is obtained by positioning a dispersion compensation plate in a specific angular position with respect to the optical axis of one of the light waves. The specific angular position is determined by measuring the spectral dispersion and varying the angular position until a spectral dispersion criterion is met.

The spectral dispersion criterion may comprise one of the following: a minimum of spectral dispersion in a specific spectral range, or a spectral dispersion below a predetermined threshold in a spectral range.

The implementation of the method according to the invention does not require prior measurements of the actual thickness of the used components.

Thanks to the method of the invention, the optical path difference between the first light wave and the second light wave is substantially the same for all wavelengths of interest of the incident light wave. The optical path difference can then be equalized with an accuracy down to a fraction of a wavelength, or a few tens of nanometers.

The dispersion compensation plate is of dispersive material and different from vacuum or air. It may, for example, be of a glass material.

According to an embodiment, the measurement of the spectral dispersion may comprise determining a contact position of the interferometer at a control wavelength, corresponding to a null optical path difference between the first and the second light waves at said control wavelength.

The determination of the contact position may comprise acquiring an interference signal by varying an optical path difference between the first and the second light path. It may further comprise identifying an interference condition such as a bright fringe or a highest central fringe or a highest constructive interference.

According to an embodiment, the measurement of the spectral dispersion may comprise:

- setting the dispersion compensation plate at an angular position,
- determining a first contact position for a first control wavelength, and a second contact position for a second control wavelength, and
- calculating the spectral dispersion by calculating a difference between the first contact position and the second contact position.

According to an embodiment, the determination of the compensation angular position may comprise at least one of the following steps:

- calculating a compensation angular position meeting the spectral dispersion criterion by applying an analytical and/or a numerical model of spectral dispersion in the interferometer in function of the angular position,

3

- measuring a spectral dispersion for a plurality of angular positions,
- interpolating or extrapolating measurement data of spectral dispersion obtained for a plurality of angular positions, to find a compensation angular position meeting the spectral dispersion criterion,
- iteratively measuring spectral dispersion for angular positions, to converge towards a compensation angular position meeting the spectral dispersion criterion.

According to an embodiment, the method of the invention may further comprise the steps of:

- acquiring an interference signal of a measurement incident light wave for a plurality of optical path differences,
- calculating a spectral information of said measurement light wave using the interference signal.

The measurement light wave is the light wave whose spectral information is sought. The spectral information may comprise for instance a spectral power density of the whole spectrum obtained by applying a Fourier transform to the interference signal. Alternatively, or in addition, it may comprise a spectral information for selected wavelengths acquired by applying specific sampling schemes to the interferogram.

According to another aspect of the invention, it is proposed an interferometer device, comprising:

- a beam splitter configured to split an incident light wave into a first light wave and a second light wave respectively propagating in a first light path and a second light path,
- adjustment means to adjust an optical path difference between the first light wave and the second light wave,
- a detector to produce an interference signal by combining said first light wave and said second light wave,

the interferometer device being characterized in that it further comprises:

- rotation means configured to position angularly a dispersion compensation plate of dispersive material with respect to an optical axis of the first light wave or the second light wave, and
- processing means configured to:

  ○ measure a spectral dispersion using the interference signal, and
  ○ determine a compensation angular position to position the dispersion compensation plate so as to meet a spectral dispersion criterion.

The adjustment means to adjust the optical path difference may comprise, in a non-limitative way, mechanical displacement means such as translation stage or piezo actuator for displacing for instance a mirror. The rotation means may comprise for instance a rotary stage, or a tip tilt mount. The processing means may comprise, in a non-limitative way, a computer, a microprocessor, a controller board, with interfacing hardware such as analogic to digital converters and I/O boards, to acquire and process interference signals and control the orientation of the dispersion compensation plate.

The interferometer device may further comprise a control light source configured to illuminate the interferometer with a control incident light wave, for measuring the spectral dispersion.

That control incident light wave is a known light wave configured to measure the spectral dispersion. In that case the interferometer can be illuminated by an incident light wave in the form of the control incident light wave for measuring the spectral dispersion, and, simultaneously or sequentially, by an incident light wave in the form of a measurement incident light wave for which an interference signal is to be measured.

The interferometer device may further comprise a control detector configured to produce a control interference signal for measuring the spectral dispersion, by collecting the light waves issued from said control light source through the interferometer.

The interferometer may then comprise a detector in the form of a control detector for the measurement of the spectral dispersion, and a detector in the form of a measurement detector for measuring an interference signal from a measurement incident light wave.

The control light source may comprise at least one low-coherence narrow-spectral range light source element.

In this case, in the detected interferogram, the central fringe, corresponding to the contact position of the interferometer device, can be easily identified.

Alternatively, or in addition, the interferometer device may comprise a broadband control light source, a control detector, and a bandpass filter between said control light source and said control detector.

According to some embodiments, the interferometer device may comprise a monochromatic control light source, such as a laser light source.

That monochromatic control light source may be used to monitor a variation of optical path difference between the first light path and the second light path.

According to an embodiment, the interferometer device may further comprise imaging lenses configured to image an incident measurement light wave issued from a field of view on a line or a matrix detector.

The imaging lenses may comprise for instance a first lens used as optical collection means and arranged to collect an incident measurement light for which an information is sought, for instance arising from an object plane or a sample. The imaging lenses may also comprise a second lens arranged so that, when combined with the first lens, the incident measurement light from the object plane is imaged on the detector.

The detector may be or comprise a CCD or a CMOS line or matrix detector, or a TDI camera.

According to an embodiment, the interferometer device may comprise optical collection means to collect a measurement incident light, a measurement detector, and at least one set of control light source and control detector being illuminated by said control light source.

The optical collection means may comprise any means to bring light in the interferometer. They may comprise for instance a lens as previously described. They may also comprise a light feed or a light entrance, a window, a fibre connector if the measurement light is brought by an optical fibre, or an aperture or an aperture stop if for instance the measurement incident light is propagating in free space or is a collimated beam.

In that case, the interferometer is illuminated by a measurement incident light through the optical collection means, and, simultaneously or sequentially, by a control incident light issued from the control light source. It also comprises a detector in the form of a measurement detector to produce an interference signal with the measurement incident wave, and a detector in the form of a control detector to produce an interference signal with the incident control light. Therefore, both incident light waves illuminate the same interferometer through the same beam splitter the same first and second light paths and the same dispersion compensation plate, but fall on different detectors.

According to an embodiment, the interferometer device may comprise a plurality of sets of control light source and control detector positioned respectively around the optical collection means and the measurement detector.

As previously, the measurement and control incident light waves illuminate the same interferometer, but their respective sources and their respective detectors are spatially offset. This can allow for instance monitoring and correcting tilt or angular uncertainties of elements varying the optical path length between first and second light path when correcting the spectral dispersion.

The interferometer device according to the invention may be of the Michelson type, comprising a mirror in the first and in the second light path, respectively, and a central beam splitter.

At least one of the mirrors may be mounted on displacement means for varying the optical path length of the first and/or the second light path.

The interferometer device may comprise a beam splitter in the form of a beam splitter plate, and a dispersion compensation plate of the same material as the beam splitter plate.

Alternatively, the interferometer device may be of the Mach-Zehnder type.

According to an embodiment, the interferometer device may further comprise an excitation light source for illuminating a sample and provoking an emission of a photoluminescence light, and optical collection means configured to direct said photoluminescence light as an incident light wave into the interferometer.

The interferometer device according to this embodiment may thus be used in photoluminescence imaging applications, and in particular as a Fourier transform imaging spectrometer. This kind of system allows, for example, for the imaging and inspection of semiconductor samples, such as silicon carbide (SiC) substrates, in order to identify and classify crystalline defects.

Of course, any other kinds of fluorescence signals may be used as incident light in the interferometer device according to the invention.

## Description of the figures and embodiments

Other advantages and characteristics will become apparent on examination of the detailed description of an embodiment which is in no way limitative, and the attached figures, where:

- FIGURE 1 shows an interferogram and corresponding power spectral density measured with a Fourier transform spectrometer,
- FIGURE 2 diagrammatically represents a non-limitative example of an interferometer device according to the present invention,
- FIGURE 3 is a diagrammatic representation of the principle of spectral dispersion compensation in an interferometric device according to the present invention,
- FIGURE 4 shows an example of spectral dispersion compensation obtained with the method according to the present invention, and
- FIGURE 5 illustrates an embodiment of a method for compensating the spectral dispersion in an interferometer device according to the invention.

It is well understood that the embodiments that will be described below are in no way limitative. In particular, it is possible to imagine variants of the invention comprising only a selection of the characteristics described hereinafter, in isolation from the other characteristics described, if this selection of characteristics is sufficient to confer a technical advantage or to differentiate the invention with respect to the state of the prior art. Such a selection comprises at least one, preferably functional, characteristic without structural details, or with only a part of the structural details if this part alone is sufficient to confer a technical advantage or to differentiate the invention with respect to the prior art.

In the FIGURES, elements common to several figures may keep the same reference.

The embodiments described below are related to Fourier transform (FT) spectrometer arrangements, in which an interferometer is used to obtain a spectral information of an incident light source. In this kind of spectrometers, the control of the spectral dispersion in the measuring interferometer is particularly important, as the dispersion over the whole useful spectral range must be limited to a fraction of wavelength to allow an accurate measurement of a spectral information.

Of course, the interferometers schemes as described can be used for any other kind of applications.

In Fourier transform spectrometers, as previously explained, the incoming light is split into a first wave and a second wave. These waves are then combined on a detector to interfere.

A variable optical path difference or delay is introduced between the first and the second waves, for instance by moving a mirror of the interferometer. The FT spectrometer is operated by acquiring, on the detector, the intensity of the interference light that is received for different values of optical path difference.

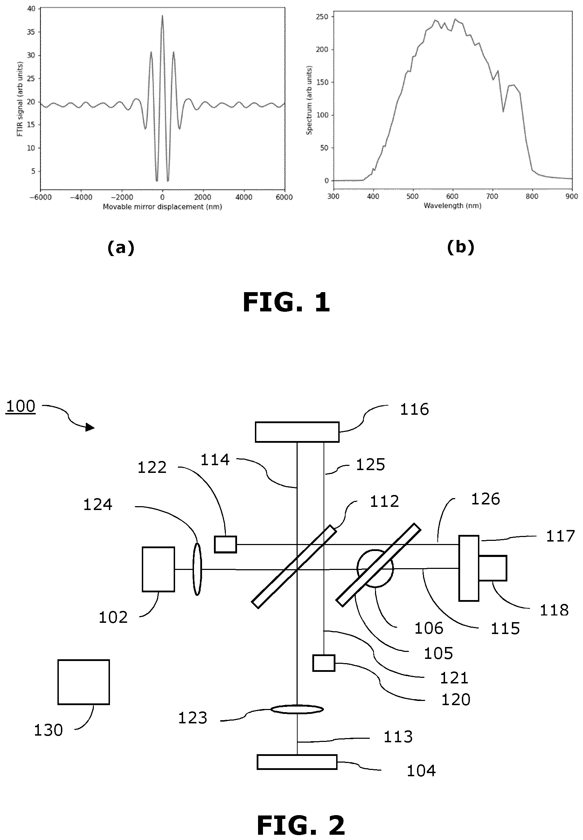

A broadband light typically produces an interference signal as shown in FIGURE 1(a). FIGURE 1(a) shows an interferogram A(d) acquired with a FT spectrometer, in function of an optical path difference, or a movable mirror displacement.

The signal A(d) is also known as the autocorrelation function of the analyzed light:

$$\mathrm{A}(d) = 1 + \mathbf{Re}(\langle E(t)E^*(t + 2d/c)\rangle),$$

where E(t) is the electric field of the analyzed light, d the optical position of the movable mirror, and c the speed of light.

All the spectral information of the analyzed light is contained in this autocorrelation signal A(d). This spectral information can be recovered by applying a simple Fourier transform (TF) to the autocorrelation signal: spectral power density = TF(A(d)).

As an example, FIGURE 1(b) shows the power spectral density corresponding to the signal of FIGURE 1(a).

FIGURE 2 is a diagrammatic representation of a non-limitative example of an interferometer device according to the present invention.

The interferometer device 100, represented in FIGURE 2, is of the Michelson type. The interferometer device 100 comprises a splitting element represented by a beam splitter plate 112, in order to split an incident light wave 113 into a first light wave 114 and a second light wave 115. The light waves 114, 115 are propagating forth and back along a first light path and a second light path, respectively. The first and second light waves are reflected by a static mirror 116 and a movable mirror 117, respectively.

The static mirror 116 may also be referred to as reference mirror, and the movable mirror 117 may also be referred to as measurement mirror.

The first light wave 114 may also be referred to as reference wave, and the second light wave 115 may also be referred to as measurement light wave.

The incident light wave may correspond to a light wave issued from a sample or object to be measured or to be imaged, such as reflected light and/or photoluminescence light.

The interferometer device 100 also comprises a detector 102. The first and second light waves reflected by the mirrors 116, 117 are recombined on the detector 102.

As represented in the example of FIGURE 2, a dispersion compensation plate 105 is arranged in the second light path, between the movable mirror 117 and the beam splitter plate 112. The dispersion compensation plate 105 is of the same material as the beam splitter plate 112, or of a material having the same refractive index as the beam splitter material. The dispersion compensation plate 105 is placed in the light path along which the light wave propagates the least through the material of the beam splitter plate 112. In the present case, the first light wave propagates three times through the beam splitter plate 112, whereas the second light wave propagates only once through the beam splitter plate 112. The function of the dispersion compensation plate 105 is to compensate the difference of the optical path lengths in the material of the beam splitter plate 112 for the first light wave and the second light wave.

The interference signal acquired by the detector 102 is a function of the optical path difference between the first light wave and the second light wave. The optical path difference δ may be controlled by moving the movable mirror 117 for a distance d, leading to an optical path difference of δ = 2d between the light waves. The detected signals may then be processed by processing means 130, in particular in order to obtain spectral information of the measurement light radiation.

In order to move the movable mirror 117, the mirror 117 may be equipped with a translation actuator 118, such as a piezo actuator. Alternatively, any other displacement means adapted for moving the movable mirror 117 may be provided.

Of course, the reference mirror 116 may also be a movable mirror.

The interferometer device according to the embodiment of FIGURE 2 is arranged in an imaging configuration. The light 113 issued from a sample 104, for instance generated by photoluminescence exited by an excitation light source (not shown), is collimated by optical collection means formed by a first lens 123 before being split by the beam splitter plate 112. The reference wave 114 and the measurement wave 115 are recombined on the detector 102 through a second lens 124.

In the embodiment illustrated in FIGURE 2, the detector 102 is a camera positioned in an imaging plane optically conjugated, by the first and the second lenses 123, 124, of an object plane, the object plane being positioned at the surface of the sample 104. Therefore, the light issued from the surface of the sample 104 in a field of view is imaged on the detector 102 through the interferometer.

It is to be noted that the first and the second lenses 123, 124 are positioned in parts of the optical path that are common to the measurement wave 115 and the reference wave 114. That way, the lenses 123, 124 do not contribute to the spectral dispersion between the measurement and reference waves.

In the illustrated embodiment, the camera comprises a CCD or CMOS detector with a line or a matrix of pixel so as to image a line or a 2D field of view, respectively, of the surface of the sample 104.

According to other embodiments, the device of the invention may have a single point or single beam measurement configuration, with an incident or measurement light 113 in the form of a single beam, and the detector 102 being a point detector, such as a photodiode.

In one embodiment, the incident light 113 from a point source may be collimated by the first lens 113 and focused on the detector 102 by the second lens 124.

In another embodiment, the incident light 113 may be a collimated beam, and the first lens 123 and possibly the second lens 124 may be omitted. In that case, the optical collection means collecting the incident light 113 may comprise an optical window, or an aperture.

The interferometer device 100 according to the embodiment shown in FIGURE 2 comprises rotation means 106 configured to position angularly the dispersion compensation plate 105 with respect to the second light wave 115. The rotation means may be, for example, a rotary stage 106 on which the dispersion compensation plate 105 is mounted. The rotary stage 106 is arranged to rotate the compensation plate 105 around a rotation axis perpendicular to the optical axis of the second light wave 115, so that to vary the angle of incidence of the second light wave 115 on that dispersion compensation plate 105. So, the angle of incidence of the second light wave 115 on the dispersion compensation plate 105 depends on the rotary orientation of the plate 105.

The interferometer device 100 is also provided with processing means 130, configured to acquire and process signals detected by the detector 102.

The processing means 130 are in particular configured to obtain spectral information of the measurement light wave 113 from interference signals detected by the detector 102.

The processing means 130 are further configured to determine a spectral dispersion of the interferometer, in particular for the measurement of the interference signals detected by the detector 102, and to correct it by adjusting the angular position of the dispersion compensation plate 105 using the rotation means 106, in order to meet a spectral dispersion criterion. Therefore, the processing means are further configured to implement and execute the method for spectral dispersion compensation according to the present invention, which is presented below.

The processing means may comprise, in a non-limitative way, a computer, a microprocessor, a controller board, and all the hardware necessary, such as volatile and non-memory memory, analogic to digital converters, and I/O boards, to execute the steps of the method.

The interferometer device according to the embodiment as represented in FIGURE 2 comprises a control interferometer. The control interferometer has the same beam splitter plate 112 and mirrors 116, 117 as the interferometer described above.

The control interferometer allows for monitoring and correcting the optical dispersion within the device, and optionally for measuring the optical path difference between the arms of the interferometer, as will be described hereunder with respect to a method according to the invention.

The control interferometer, as represented in FIGURE 2, comprises a control light source 120. The control light source 120 comprises at least one light source element. The control light source 120 is positioned so as to emit at least one control light wave 121, which is distinct from the incident or measurement light wave 113 as described above. The control light wave 121 is transmitted through the interferometer in the same way, and through the same components, as the measurement light 113. So, that control light wave 121 is subjected to the same optical delays and the same spectral dispersion effects as the measurement light wave.

The control light source 120 may also comprise several light source elements, combined so as to emit the control

EP 4 560 277 A1

light in the same optical axis.

The control light source 120 may comprise one or several low-coherence light sources selectively emitting light in narrow spectral ranges around calibration or control wavelengths distributed over the spectral range of interest of the measurement light.

For instance, for analyzing a spectrum of interest in the visible range (400-800 nm), the control light source may comprise light emitting diodes (LEDs) emitting respectively in the red (R), green (G), and blue (B) part of the spectrum, and optically combined, or a RGB switchable LED.

The spectral range of these sources is chosen so that their coherence length corresponds to a small number of wavelengths of the corresponding light source. Thus, the central constructive interference (corresponding to zero optical path difference) is well identifiable by its amplitude compared to the neighboring interferences. And at least a few interference fringes are visible.

The control light source may also be a broadband control light source combined with a bandpass filter.

The control interferometer further comprises a control detector 122, distinct from the detector 102 described above. The control light wave 121 is split by the beam splitter 112 into a first control light wave 125 and a second control light wave 126. The first and second control light waves 125, 126 are propagating forth and back along the first and second light paths, respectively, being reflected by the static mirror 116 and the movable mirror 117, respectively. The first and second control light waves reflected by the mirrors 116, 117 are recombined on the control detector 122.

In the case of a broadband control light source, the detector may comprise the bandpass filter.

The interference signals produced within the control interferometer allow for monitoring the optical dispersion of the interferometer device. The signal at several control wavelengths is detected selectively by the control detector 122. The control wavelengths can be used sequentially with a single detector 122, or simultaneously with a detector comprising, for instance, dichroic filters directing the respective calibration wavelengths at different detector elements.

In addition to the dispersion monitoring, the control interferometer can be arranged to allow measuring optically the optical path difference between the arms of the interferometer; i.e., allow for displacement measurement. This can be done in place of, or in addition to, an internal metrology system monitoring the translation of the measurement mirror 117, such as with a capacitive sensor.

In that case, the control light source 120 comprises a laser source, such as a laser diode, emitting light with a stable and well-known optical wavelength and a coherence length much larger than the useful displacement range of the measurement mirror. The light wave issuing from the laser source, referred to as metrology light, is split into a metrology measurement wave and a metrology reference wave, these light waves being made to interfere on the control detector 122. The phase of the interference signal can then be retrieved using well-known methods to measure a relative displacement of the mirrors of the interferometer.

To allow measuring displacements at the same time as measuring dispersion, the control detector 122 may comprise an optical separator (dichroic or by polarization) and separate detector elements to allow detecting the metrology laser light and the dispersion-monitoring light simultaneously.

The device according to the invention may comprise more than one control interferometer, for example, two, three, or four control interferometers. The several control interferometers may be positioned so that their respective control beams cross the beam splitter 112 in locations laterally shifted with respect to the location where the measurement beam 113 crosses the beam splitter. These locations can also be positioned in a symmetrical way with respect to the measurement beam 113. So, the spectral dispersion can be monitored at several places with respect to the beam splitter and the mirrors. This may provide more accurate measurements and allow correcting parallelism mismatches.

According to embodiments, these multiple control interferometers may each comprise all the control light sources for the dispersion monitoring and, the case being, the displacement metrology, or only part of them, with various control light sources, for instance of different wavelengths, positioned in various interferometers.

Notably, a control interferometer for dispersion monitoring may be distinct from a control interferometer for displacement measurement.

The interferometer device as illustrated in FIGURE 2 may implement in a method for compensating the spectral dispersion according to the invention.

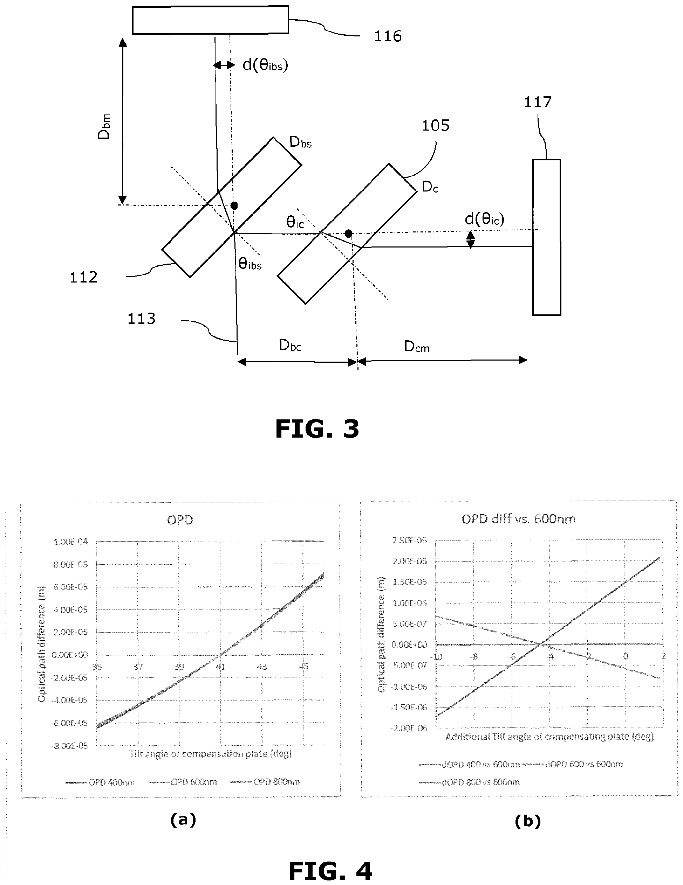

The principle of the dispersion compensation according to the present invention is detailed with reference to FIGURE 3 and FIGURE 4.

With reference to FIGURE 3, for the reference arm of the interferometer, the following variables are defined:

- $D_{bs}$ the geometrical thickness of the beam splitter 112,
- $D_{bm}$ the geometrical distance along the optical axis of the reference wave 114 between the centre of the beam splitter 112 and the reference mirror 116,
- $\theta_{ibs}$ the angle of incidence of the light wave on the beam splitter 112 with respect to the normal to its surface,
- $n_{bs}$ the index of refraction of the beam splitter 112.

8

For the measurement arm of the interferometer, the following variables are defined:

- $D_c$ the geometrical thickness of the dispersion compensation plate 105,
- $D_{bc}$ the geometrical distance between the point of contact of the optical wave on the beam splitter 112 and the centre of the compensating plate 105 along the optical axis of the reflected wave, the compensating plate being supposed to be rotated around that centre,
- $D_{cm}$ the geometrical distance between the centre of the dispersion compensation plate 105 and the measurement mirror 117,
- $\theta_{ic}$ the angle of incidence of the measurement light wave 115 on the dispersion compensation plate 105 with respect to the normal to its surface,
- $n_c$ the index of refraction of the dispersion compensation plate 105.

In the measurement arm, the optical path length of the measurement wave from the contact point, or centre, of the beam splitter 112 to the measurement mirror 117 (one way) is:

$$L_M = L_{1M} + L_{2M} + L_{3M}, \qquad \text{(Eq. 1)}$$

where the optical path length between the beam splitter and the dispersion compensation plate is:

$$L_{1M}(\theta_{ic}) = D_{bc} - \frac{D_c}{2\cos\theta_{ic}}. \qquad \text{(Eq. 2)}$$

The optical path length is defined as the geometrical path length multiplied by the index of refraction of the material.

The optical path length within the compensating plate 105 is:

$$L_{2M}(\theta_{ic}) = \frac{n_c^2 D_c}{\sqrt{n_c^2 - \sin^2\theta_{ic}}}, \qquad \text{(Eq. 3)}$$

and the optical path length between the compensating plate 105 and the measurement mirror 117 is:

$$L_{3M}(\theta_{ic}) = D_{cm} - \frac{D_c}{2\cos\theta_{ic}} + d_L(\theta_{ic})\tan\theta_{ic}, \qquad \text{(Eq. 4)}$$

the lateral displacement of the light wave being

$$d_L(\theta_{ic}) = D_c \sin\theta_{ic}\left(1 - \frac{\cos\theta_{ic}}{\sqrt{n_c^2 - \sin^2\theta_{ic}}}\right). \qquad \text{(Eq. 5)}$$

In the reference arm, the optical path length of the reference wave from the contact point on the beam splitter 112 to the reference mirror 116 (one way) is:

$$L_R = L_{2R} + L_{3R}, \qquad \text{(Eq. 6)}$$

where the optical path within the beam splitter 112 is:

$$L_{2R}(\theta_{ibs}) = \frac{n_{bs}^2 D_{bs}}{\sqrt{n_{bs}^2 - \sin^2\theta_{ibs}}}, \qquad \text{(Eq. 7)}$$

and the optical path length between the beam splitter 112 and the reference mirror 116 is:

$$L_{3R}(\theta_{ibs}) = D_{bm} - \frac{D_{bs}}{2\cos\theta_{ibs}} + d_L(\theta_{ibs})\tan\theta_{ibs}, \qquad \text{(Eq. 8)}$$

the lateral displacement of the beam being:

$$d_L(\theta_{ibs}) = D_{bs}\sin\theta_{ibs}\left(1 - \frac{\cos\theta_{ibs}}{\sqrt{n_{bs}^2 - \sin^2\theta_{ibs}}}\right). \qquad \text{(Eq. 9)}$$

Balancing the interferometer means adjusting the optical length of the measurement arm and/or of the reference arm until the lengths match:

$$L_M = L_R \qquad \text{(Eq. 10)}$$

For the considered application, it is also essential to satisfy this matching condition as much as possible over the whole spectral range of interest. Thus, the matching condition can be reformulated as

$$\min_{\lambda_{range}}[L_M - L_R]. \qquad \text{(Eq. 11)}$$

If the thickness and the index of refraction, or the material, of the beam splitter and the dispersion compensation plate match perfectly, by having the same angle of incidence $\theta_{ic} = \theta_{ibs}$ (for instance 45 degrees), the respective optical path lengths in the measurement and the reference arms can be made to match for all wavelengths.
However, as detailed previously, in practice there may be a thickness mismatch $\varepsilon$ between the beam splitter and the compensating plate, so that:

$$D_c = D_{bs} + \varepsilon. \qquad \text{(Eq. 12)}$$

Due to optical dispersion within this thickness mismatch, varying an optical path length, for instance in air, is not sufficient to compensate dispersion over the whole range of wavelengths of interest.
According to the invention, it is possible, by rotating the dispersion compensation plate of an additional compensation angle $\theta_{icomp}$, to compensate the optical path lengths difference between the interferometer's arms. The dispersion is then minimized to a level which is acceptable for a range of applications.
The dispersion compensation according to the present invention can be achieved, for instance, by calculating the compensation angle $\theta_{icomp}$ such as

$$\theta_{ic} = \theta_{ibs} + \theta_{icomp}, \qquad \text{(Eq. 13)}$$

for which the matching condition of (Eq. 11) is satisfied, meaning that the dispersion of optical paths across the spectral range of interest is minimized.
An example of such compensation is illustrated in FIGURE 4. The example of FIGURE 4 is computed for a beam splitter and a compensating plate made of fused silica. The beam splitter has a thickness of 3mm. The dispersion compensating plate has a thickness of 3.1mm, corresponding to a nominal thickness of 3mm and a thickness error of +0.1mm, which is usual in catalogue products. The incidence angle on the beam splitter $\theta_{ibs}$ is 45 degrees.
In FIGURE 4(a), optical path length differences ($L_M$-$L_R$) between the interferometer's arms are calculated for wavelengths of 400nm, 600nm, and 800nm, in function of the incidence angle $\theta_{ic}$ (corresponding to the angular position) of the dispersion compensation plate. The value zero of the optical path difference ($L_M = L_R$) in the graph corresponds to a balanced interferometer in which the thickness of the dispersion compensating plate would matches the thickness of the beam splitter (3mm), and the beam splitter and the dispersion compensation plate have the same angle of incidence $\theta_{ic} = \theta_{ibs} = 45$ degrees. It is illustrated how the optical path length difference at various wavelengths evolves with the compensation rotation of the compensating plate.
In FIGURE 4(b), a plot of the optical path length difference ("OPD") for the wavelengths of 400nm and 800nm, compared to 600nm, is shown as a function of the compensation angle $\theta_{icomp}$. The diagram allows a close-up view illustrating the residual dispersion after applying the compensation angle. In this case, the remaining optical path difference between wavelengths of 400 nm and 800nm is below 10nm, which is satisfying for many applications, and in particular for spectral analysis.

FIGURES 4(a) and 4(b) show that both the optical path difference and the dispersion can be minimized, in this case for a compensation angle of $\theta_{icomp}$ = -4.5 degrees, or a tilt angle of the compensating plate of $\theta_{ic}$ = 40.5 degrees.

It is to be noted that in these conditions a positive or negative thickness error (compensation plate thicker or thinner than the beam splitter) can be compensated.

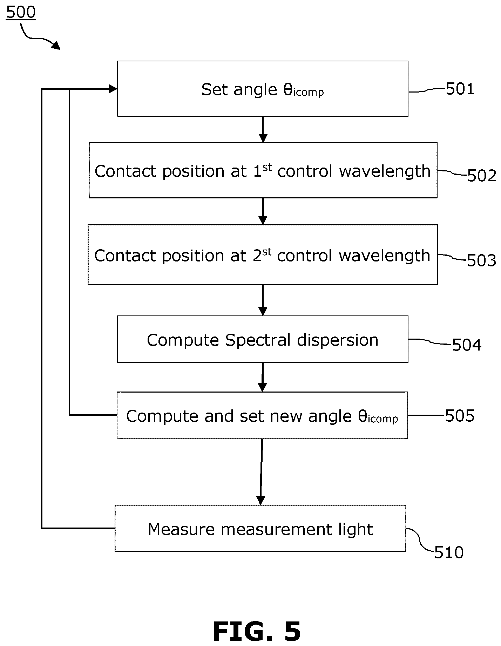

FIGURE 5 illustrates a method for compensating the spectral dispersion in an interferometer device according to an embodiment of the present invention.

The method 500, represented in FIGURE 5, comprises the determination of the spectral dispersion and the compensation of the spectral dispersion. In the compensation phase, the dispersion compensation plate is rotated according to a compensation angle in order to to minimize a dispersion criterion as explained hereunder.

In a step 501, the compensation angle $\theta_{icomp}$ is to set to a first value, for instance zero, or initialized.

In step 502, an interference signal for a first control wavelength, from a control interferometer having a first control light source, is detected. For this, the position of the measurement mirror is scanned so as to acquire an interference signal corresponding to the autocorrelation of the control light source, as illustrated for example on FIGURE 1(a). The contact position with zero optical path difference is located on the interferogram by locating the summit of the central bright fringe or the constructive interference and retrieving that position as provided by the internal metrology of the interferometer, either using a control interferometer with a laser light source as described previously or a metrology system internal to the actuators of the mirror(s) .

In step 503, similarly to step 502, a second contact position is measured for at least a second wavelength (i.e., a second control light source having a different wavelength than the first control light source).

Further contact positions for further control wavelengths may be measured. Preferably, the control wavelengths are chosen so as to cover the spectral range of interest.

In step 504, the differences of location (or mirror positions) of the respective contact positions for the different wavelengths are calculated, thus providing a measurement of the spectral dispersion.

The determination phase then comprises a step 505 of computing a new compensation angle $\theta_{icomp}$ to compensate the spectral dispersion, and to adjust the angular position of the compensating plate to that value.

The steps 501 to 505 can then be repeated iteratively until the spectral dispersion meets a criterion, such as:

- the spectral dispersion is smaller than a threshold (for instance a fraction of wavelength, 1/10th of a central wavelength, ...),
- the variation of the spectral dispersion between two iterations of the steps 501-505 falls below a threshold (convergence criterion).

Steps 501 to 505 correspond to a dispersion adjustment phase for determining and compensating the spectral dispersion in the interferometer. When they are completed, the device is ready for measurements of a measurement light, during a measurement phase as illustrated at step 510. Such measurement can comprise measuring a spectral information of the measurement light, as previously described. Of course, the steps 501 to 505 of the dispersion adjustment phase can be repeated periodically in alternance or in parallel with the measurement phase 510 to check if the spectral dispersion in the device remains within the expected limits.

As illustrated in FIGURE 4, the dispersion of optical contact positions for different wavelengths varies in a monotonous way and fairly linearly with the compensation angle, at least in a small neighbourhood. Therefore, with measurements of contact positions for at least two wavelengths and at least two compensation angles in steps 501-505, it is possible to extrapolate the data for each wavelength in a straight line and find the location where they cross, providing a new compensation angle $\theta_{icomp}$. And if needed, this process can be repeated iteratively by measuring a new set of optical contact positions for different wavelengths. In that way, the spectral dispersion can be minimized without any priori knowledge of the uncertainties on the components, by an iterative process.

Of course, if sufficient a-priori information is available, such as the real thickness of the beam splitter and the dispersion compensation plate, the compensation angle $\theta_{icomp}$ may be directly calculated using (Eq. 1) and (Eq. 6) at step 501, and, optionally, verified at steps 502, 503, and if necessary, adjusted as described above by iteratively repeating steps 501-505.

So, the a-priori information may be used to calculate directly a setpoint for the compensation angle $\theta_{icomp}$, or as a means to initialize an iterative method and improve the efficiency and the speed of the convergence.

Of course, the invention is not limited to the examples detailed above.

**Claims**

**1.** A method (500) for acquiring an interference signal, comprising:

- splitting an incident light wave into a first light wave and a second light wave propagating respectively in a first light path and a second light path of an interferometer,
- adjusting an optical path difference between the first light wave and the second light wave, and
- producing the interference signal by combining said first light wave and said second light wave on a detector,

the method being **characterized in that** it further comprises:

- measuring a spectral dispersion using the interference signal, and
- compensating (505) said spectral dispersion by angularly positioning a dispersion compensation plate of dispersive material in a compensation angular position, with respect to an optical axis of the first light wave or the second light wave, to meet a spectral dispersion criterion.

2. The method (500) of claim 1, wherein the measurement of the spectral dispersion comprises determining a contact position of the interferometer at a control wavelength, corresponding to a null optical path difference between the first and the second light waves at said control wavelength.

3. The method (500) of claim 2, wherein the measurement of the spectral dispersion comprises:

- setting (501) the dispersion compensation plate at an angular position,
- determining (502, 503) a first contact position for a first control wavelength, and a second contact position for a second control wavelength, and
- calculating (504) the spectral dispersion by calculating a difference between the first contact position and the second contact position.

4. The method (500) of any of the preceding claims, wherein the determination of the compensation angular position comprises at least one of the following steps:

- calculating a compensation angular position meeting the spectral dispersion criterion by applying an analytical and/or a numerical model of spectral dispersion in the interferometer in function of the angular position,
- measuring a spectral dispersion (501-504) for a plurality of angular positions,
- interpolating or extrapolating measurement data of spectral dispersion obtained for a plurality of angular positions, to find a compensation angular position meeting the spectral dispersion criterion,
- iteratively measuring (501-504) spectral dispersion for angular positions, to converge towards a compensation angular position meeting the spectral dispersion criterion.

5. The method (500) of any of the preceding claims, wherein the spectral dispersion criterion comprises one of the following: a spectral dispersion below a predetermined threshold in a spectral range, a minimum of dispersion in a spectral range.

6. The method (500) of any of the preceding claims, further comprising the steps of:

- acquiring (510) an interference signal of a measurement incident light wave for a plurality of optical path differences,
- calculating a spectral information of said measurement light wave using the interference signal.

7. An interferometer device (100), comprising:

- a beam splitter (112) configured to split an incident light wave (113) into a first light wave (114) and a second light wave (115) respectively propagating in a first light path and a second light path,
- adjustment means (118) to adjust an optical path difference between the first light wave (114) and the second light wave (115),
- a detector (102) to produce an interference signal by combining said first light wave (114) and said second light wave (115),

the interferometer device (100) being **characterized in that** it further comprises:

- rotation means (106) configured to position angularly a dispersion compensation plate (105) of dispersive material with respect to an optical axis of the first light wave (114) or the second light wave (115), and

- processing means (130) configured to:

- measure a spectral dispersion using the interference signal, and
- determine a compensation angular position to position the dispersion compensation plate (105) so as to meet a spectral dispersion criterion.

8. The interferometer device (100) of the preceding claim, which further comprises a control light source (120) configured to illuminate the interferometer with a control incident light wave (121), for measuring the spectral dispersion.

9. The interferometer device (100) of the preceding claim, which further comprises a control detector (122) configured to produce a control interference signal for measuring the spectral dispersion, by collecting the light waves (125, 126) issued from said control light source (120) through the interferometer.

10. The interferometer device (100) of claim 8 or 9, wherein the control light source (120) comprises at least one low-coherence narrow-spectral range light source element.

11. The interferometer device (100) of claim 9, which comprises a broadband control light source (120), a control detector (122), and a bandpass filter between said control light source (120) and said control detector (122).

12. The interferometer device (100) of any of claims 7 to 11, which further comprises imaging lenses (123, 124) configured to image an incident measurement light wave issued from a field of view on a line or a matrix detector (102).

13. The interferometer device (100) of any of claims 7 to 12, which comprises optical collection means to collect a measurement incident light, a measurement detector, and at least one set of control light source and control detector being illuminated by said control light source.

14. The interferometer device (100) of the preceding claim, which comprises a plurality of sets of control light source and control detector positioned respectively around the optical collection means and the measurement detector.

15. The interferometer device (102) of any of claims 7 to 14, which further comprises an excitation light source for illuminating a sample and provoking an emission of a photoluminescence light, and optical collection means configured to direct said photoluminescence light as an incident light wave into the interferometer.

**FIG. 1**

**FIG. 2**

**FIG. 3**

(a)                                                                (b)

**FIG. 4**

**FIG. 5**

## EUROPEAN SEARCH REPORT

Europäisches
Patentamt
European
Patent Office
Office européen
des brevets

**Application Number**

EP 23 30 7024

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | R M Morganl: "Nulling Interferometric beam combiner utilizing dielectric plates: experimental results in the visible broadband", <br><br> , <br> 31 December 2000 (2000-12-31), XP093155277, Retrieved from the Internet: URL:https://citeseerx.ist.psu.edu/document ?repid=rep1&type=pdf&doi=63646a00258d088a4 06460143b5f243f3687c3c9 | 1-13,15 | INV. G01J3/45 G01J3/10 |
| Y | * figure 7 * <br> * page 5, paragraph 3 – paragraph 4 * <br> ----- | 10,14 | |
| Y | STEFAN R. MARTIN: "Deep nulling of laser light in a rotational shearing interferometer", INTERFEROMETRY FOR OPTICAL ASTRONOMY II, vol. 4838, 24 February 2003 (2003-02-24), page 656, XP093155272, DOI: 10.1117/12.459340 <br> * figure 2 * <br> * page 4 * <br> ----- | 10 | |
| Y | US 4 444 501 A (SCHWIESOW RONALD L [US]) 24 April 1984 (1984-04-24) <br> * figure 1 * <br> ----- | 14 | |

**TECHNICAL FIELDS SEARCHED (IPC)**

G01J

The present search report has been drawn up for all claims

| Place of search | Date of completion of the search | Examiner |
|---|---|---|
| Munich | 24 April 2024 | Jacquin, Jérôme |

EPO FORM 1503 03.82 (P04C01)

## ANNEX TO THE EUROPEAN SEARCH REPORT
## ON EUROPEAN PATENT APPLICATION NO.

**EP 23 30 7024**

This annex lists the patent family members relating to the patent documents cited in the above-mentioned European search report.
The members are as contained in the European Patent Office EDP file on
The European Patent Office is in no way liable for these particulars which are merely given for the purpose of information.

**24-04-2024**

| Patent document cited in search report | Publication date | Patent family member(s) | Publication date |
|---|---|---|---|
| US 4444501 A | 24-04-1984 | NONE | |

For more details about this annex : see Official Journal of the European Patent Office, No. 12/82